# FASCICULE DE BREVET EUROPEEN

(11) **EP 0 604 310 B1**
(45) Date de publication et mention de la délivrance du brevet: **22.12.1999**
(21) Numéro de dépôt: 93403131.1
(22) Date de dépôt: 21.12.1993
(51) Int. Cl.: G06F 12/12

(54) **Procédé de gestion d'une mémoire tampon, et système informatique l'incorporant**
Informationssystem und Verfahren zur Pufferspeicherverwaltung
Information system and method for cache memory management

(30) Priorité: 22.12.1992 FR 9215519
(43) Date de publication de la demande: 29.06.1994
(73) Titulaire: BULL S.A., 78434 Louveciennes Cedex (FR)
(72) Inventeur: Villette, Michel, F-78150 Le Chesnay (FR); Servant, Hervé, F-78280 Guyancourt (FR)
(74) Mandataire: Denis, Hervé

(56) Documents cités:
- EP-A- 0 086 886
- EP-A- 0 509 231
- IBM TECHNICAL DISCLOSURE BULLETIN, vol. 30, no. 5 , Octobre 1987 , NEW YORK, US; pages 358 - 359 'Upgrading LRU Positions in Cache Management'
- IBM SYSTEMS JOURNAL, vol. 23, no. 2 , 1984 , ARMONK, US; pages 211 - 218 J.Z.TENG ET AL 'Managing IBM Database 2 Buffers to Maximize Performance'

## Description

L'invention se rapporte à un procédé de gestion d'un ensemble de tampons constituant une mémoire tampon. Elle a aussi pour objets corollaires un support d'enregistrement tel qu'une disquette ou une bande magnétique incorporant un logiciel pour la mise en oeuvre du procédé, ainsi qu'un système informatique pour la mise en oeuvre du procédé, et plus particulièrement à un système informatique de gestion de base de données, désigné plus couramment par son acronyme SGBD.

Une mémoire tampon constitue une interface rapide et de petite capacité entre un processeur et une mémoire de données de grande capacité et généralement lente. La mémoire tampon est faite d'un ensemble de tampons destinés à stocker des extraits respectifs de la mémoire de données. Elle peut être une antémémoire pour recevoir des blocs de données de la mémoire de données. L'exemple choisi pour bien illustrer l'invention concerne la mémoire tampon d'un SGBD. Un SGBD est commandé par le système d'exploitation d'un ordinateur au moyen d'un processeur pourvu d'une mémoire virtuelle constituant tout ou partie de la mémoire centrale de l'ordinateur et représentative de la mémoire tampon. Les extraits de données stockés dans la mémoire tampon sont couramment des pages de la mémoire de masse constitutive de la base de données. La mémoire tampon est ainsi couramment appelée antémémoire de pages (pages cache memory). La gestion des tampons de l'antémémoire est faite par un gestionnaire de tampons (buffer manager) commandé par le processeur.

On distingue ordinairement deux sortes de traitements exécutés par les processus exploitant une mémoire tampon, et plus particulièrement l'antémémoire de pages de l'exemple considéré. Les traitements accédant fréquemment à un petit nombre de pages de l'antémémoire sont appelés traitements locaux et ceux accédant peu fréquemment à un grand nombre de pages de l'antémémoire sont appelés traitements non locaux. Pour l'exécution simultanée de traitements locaux et de traitements non locaux, l'antémémoire est partagée sous la direction du gestionnaire de tampons. Ce partage pose un problème majeur pour la gestion de l'antémémoire.

Les gestionnaires de tampons sont couramment et logiquement optimisés pour des traitements effectuant des accès locaux. Ordinairement l'antémémoire est gérée par un algorithme connu sous le nom de LRU (Least Recently Used). Cet algorithme dresse une liste des tampons de l'antémémoire en fonction de la date de leur dernière utilisation. Par principe, à chaque fois qu'un tampon est référencé, le LRU le rechaine en tête de la liste. De ce fait, les tampons qui le précédaient sur la liste descendent d'une place sur la liste. On dit que ces tampons vieillissent d'une place. Quand le gestionnaire des tampons ne trouve pas une page dans l'antémémoire, il demande l'extraction de la page de la base de données et son chargement dans l'antémémoire tandis que le LRU désigne le tampon qui a été le moins récemment référencé pour enregistrer la nouvelle page. Une telle méthode est notamment décrite dans le document EP-A-0509231 (IBM). Selon cette méthode, il est fait une distinction entre les pages demandées et les pages susceptibles d'être demandées. Une section dans l'antémémoire est attribuée respectivement à chaque type de page et la taille de chaque section est équilibrée en fonction de leurs densité de succès. Toutes les nouvelles pages demandées et les pages susceptibles d'être demandées sont positionnées en tête de liste des tampons gérés par le LRU. Cette optimisation pour les traitements locaux est particulièrement inadaptée à l'exploitation simultanée de l'antémémoire par des traitements non locaux. En effet, l'accès à de nouvelles pages se produit beaucoup plus fréquemment pour des traitements non locaux. Il s'ensuit alors une modification rapide de la tête de liste du LRU et, par conséquent, un vieillissement prématuré du contenu des autres tampons. Ce vieillissement prématuré perturbe beaucoup la gestion des traitements locaux et ralentit considérablement leur exécution.

Un autre problème, dû au rechainage en tête de liste LRU des tampons nouvellement référencés, se pose surtout dans un environnement multiprocesseur. Le rechainage en tête de liste doit en effet être atomique pour préserver l'intégrité des chaînages de la liste. Dans un système multiprocesseur, cela oblige à prendre un verrou exclusif durant l'opération de déchaînage-rechaînage pour déplacer le tampon dans la liste. La prise d'un verrou exclusif constitue ce qu'on appelle une section critique. Une section critique ne peut être exécutée que par un seul processeur à un instant donné et cause ainsi la dégradation du rendement du système multiprocesseur.

L'invention résout ces deux problèmes en permettant d'optimiser la gestion d'un ensemble de tampons exploité par des traitements locaux et non locaux concurrents.

Une méthode connue, notamment du document IBM Technical Disclosure Bulletin, Vol.30, No. 5, October 1987, pages 358-359, et intitulé : "Upgrading LRU Positions in Cache Management", se rapporte au même problème technique que l'invention.

Cette méthode a pour objet un procédé de gestion d'un ensemble de tampons au moyen d'une liste classant les tampons par ordre d'utilisation la moins récente (LRU), et lorsque l'un des tampons est référencé, à classer le tampon en fonction de sa position par rapport à une position de seuil de la liste.

Plus précisément, le document décrit un procédé de gestion d'une antémémoire selon l'algorithme LRU, selon lequel l'antémémoire est divisée en deux sections "demand" et "prefetch". Quand une nouvelle page de données "demand" est entrée dans l'antémémoire, le pointeur MRU est mis à jour pour pointer sur cette nouvelle page. Si c'est une page "prefetch" qui est introduite, le pointeur LRU de la section "demand" de la table de gestion LRU est mis à jour pour pointer sur cette nouvelle page. Dans le cas où une page "prefetch" ou "demand" de l'antémémoire est référencée avec succès (cache hit), cette page est rechaînée vers le sommet de la table LRU. Une position libre dans le cache est sélectionnée dans l'une des deux sections "demand" et "prefetch" selon la comparaison des taux d'accès réussis de ces deux sections (demand hit density et prefetch hit density).

L'invention a pour objet un procédé permettant d'optimiser la gestion des tampons en définissant la position de seuil en fonction du taux courant de succès d'accès aux tampon.

En corollaire, l'invention a aussi pour objet un système informatique pour la mise en oeuvre du procédé ci-dessus , caractérisé en ce qu'il comporte un processeur connecté à une mémoire de données par l'intermédiaire d'un ensemble de tampons géré par un gestionnaire selon un algorithme de LRU, des moyens générateurs d'au moins une position de seuil, des moyens de comparaison connectés aux moyens générateurs et à l'algorithme, et des moyens de calcul du taux courant de succès d'accès aux tampons ; les moyens de calcul étant connecté aux moyens générateurs.

L'invention a pour avantage d'offrir un positionnement dynamique du seuil en fonction du taux courant de succès d'accès aux tampons de sorte que plus le taux de succès est élevé, plus les tampons référencés sont nombreux, ce qui permet d'évacuer plus rapidement les pages nouvelles qui n'ont pas été à nouveau référencées et de conserver plus longtemps les autres, tandis que plus le taux de succès est faible, moins les tampons sont référencés, ce qui permet de conserver plus longtemps les pages nouvelles.

Les caractéristiques et avantages de l'invention ressortiront de la description qui suit, donnée à titre d'exemple et illustrée dans les dessins annexés.

Dans les dessins :
- la figure 1 est une vue synoptique d'un système informatique conforme à l'invention constituant un système de gestion de base de données et incorporant un ensemble de tampons géré selon le procédé de l'invention ; et
- la figure 2 illustre par un organigramme un procédé de gestion de l'ensemble de tampons représenté sur la figure 1.

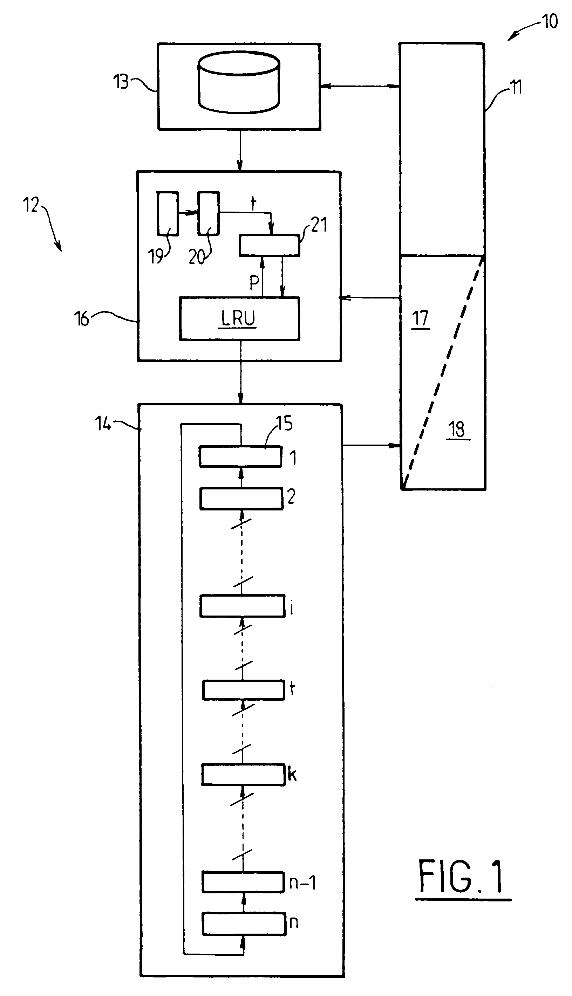

La figure 1 illustre par une vue synoptique un système informatique 10 comprenant un processeur central 11 connecté par l'intermédiaire d'une mémoire centrale 12 à une mémoire de masse 13 constituant une base de données dans l'exemple considéré. La mémoire centrale 12 se comporte ainsi comme une mémoire tampon entre le processeur central 11 et la base de données 13. La mémoire centrale 12 comprend un ensemble 14 de n mémoires tampons 15, et un gestionnaire 16 de l'ensemble 14 sur la base d'un algorithme LRU. Les n tampons 15 sont adaptés à stocker chacun un extrait de la base de données 13, une page de 4 kilooctets dans l'exemple illustré. Les n tampons 15 sont chaînés dans un ordre 1, 2, ..., n déterminé par le LRU. Le processeur 11 accède à l'ensemble 14 pour exécuter des traitements locaux 17 et des traitements non locaux 18. Sous la commande du gestionnaire 16, les pages requises par les traitements 17 et 18 sont copiées dans l'ensemble 14 à partir de la base de données externe 13. L'ensemble 14 est donc partagé entre traitements locaux et traitements non locaux concurrents.

Le système informatique 10 contient aussi de manière classique, couramment dans le gestionnaire 16 comme illustré, un dispositif 19 de calcul du taux courant de présence de pages dans l'ensemble 14 par rapport au nombre total de pages demandé par le processeur. Ce taux est couramment appelé taux courant de succès (hit ratio) d'accès aux tampons. On dit en effet qu'il y a succès quand l'adresse d'une page demandée par le processeur 11 est l'une des adresses contenues dans le répertoire de l'ensemble des tampons. Le taux de succès est remis régulièrement à jour, par exemple tous les 1000 références.

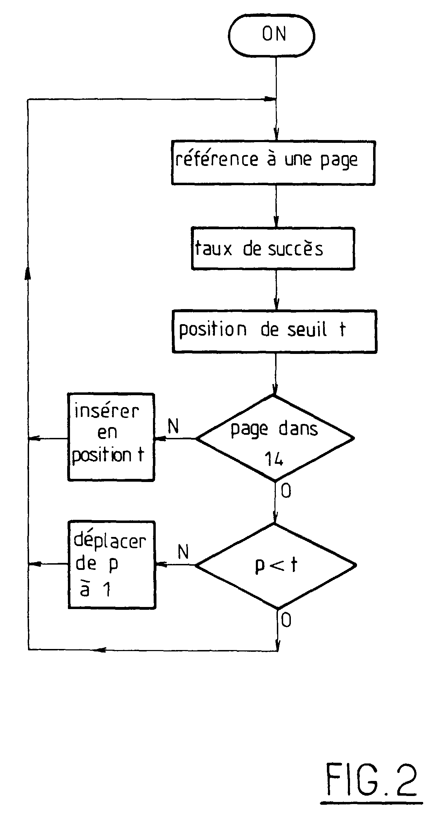

Selon l'invention, lorsqu'un tampon est référencé, il est classé dans la liste par le gestionnaire 16 en fonction de sa position p par rapport à une position de seuil t de la liste. Un exemple illustratif du procédé conforme à l'invention est représenté par l'organigramme fonctionnel de la figure 2.

On considère par exemple que l'ensemble 14 se compose de 1000 tampons 15 (n = 1000). Selon l'exemple illustré, la position de seuil t est définie en fonction du taux courant de succès d'accès aux tampons. La fonction choisie dans l'exemple illustré est la simple correspondance du taux de succès au nombre de tampons de l'ensemble 14. Ainsi, si par exemple le taux de succès est de 85%, la position de seuil t dans l'ensemble 14 des 1000 tampons 15 correspond à la position t = 850. Le dispositif informatique 10 contient, de préférence dans le gestionnaire 16 comme illustré, un générateur 20 de la position de seuil t recevant le taux de succès fourni par le dispositif 19 et un dispositif de comparaison de position 21 recevant du générateur 20 la position de seuil t et du LRU la position p du tampon référencé dans la liste.

Si une page référencée se trouve déjà dans l'ensemble 14, on compare la position p du tampon qui l'incorpore avec la position de seuil t. Si la position p est une position i précédant la position t comme illustré dans la figure 1, c'est-à-dire si p < t, le gestionnaire 16 ne change pas la position i du tampon 15. On considère donc que la page demandée se trouve dans une zone stable ou fraîche de la liste. En d'autres termes, toutes les pages stables (working set pages) placées avant la position de seuil t ne sont pas vieillies après lecture d'une page. Par contre, si la position p est une position k correspondant à la position de seuil ou la suivant, c'est-à-dire si p ≥ t, on la place en tête de la liste. Le vieillissement n'a lieu que dans ce cas.

Si la page demandée ne se trouve pas dans l'ensemble 14, on la place à la position de seuil t, de sorte que la lecture de cette page ne fait pas vieillir les pages contenues dans la zone stable et considérées comme actives. Ainsi, ce n'est que si la page est référencée une nouvelle fois qu'elle sera chaînée en tête de la liste, conformément aux critères de comparaison précédents.

L'exemple illustratif du procédé de l'invention peut avoir plusieurs variantes. Dans ce procédé, la détermination de la position de seuil t est une simple correspondance de ce taux avec l'ensemble des positions de la liste LRU. Cependant, il est clair que la détermination de la position de seuil peut être une fonction plus élaborée de la valeur du taux de succès, pouvant même conduire à une position de seuil t évolutive ou à plusieurs valeurs de seuil. Par exemple, une première position de seuil t1 pourrait être celle définie précédemment pour l'insertion d'une nouvelle page et la comparaison d'une position de page présente p, et une autre position t2 pourrait être de valeur moindre, par exemple t2 = t1 /2, pour correspondre à un premier rechaînage. Ainsi, une page déjà présente et ayant une position suivant la position de seuil t1 pourrait être rechaînée à la position t2. Selon un autre exemple, la position de seuil t peut être une même valeur fixe prédéterminée pour une gamme de valeurs du taux courant de succès. Par exemple, la position de seuil t serait 900 pour un taux compris entre 80 % et 100 %, 700 pour un taux compris entre 60 % et 80 %, etc... Bien sûr, cet exemple peut être combiné avec l'exemple précédent. D'autre part, bien que la position de seuil t choisie dans l'exemple illustré soit définie en fonction du taux de succès d'accès aux tampons, il est clair qu'elle peut être tout simplement une position fixe prédéterminée. Ainsi le procédé consisterait à comparer la position p avec une ou plusieurs positions fixes de seuil. On comprend aussi que, plus généralement, une position de seuil variable pourrait se définir en fonction d'un autre paramètre que le taux de succès et qu'une position variable pourrait s'ajouter à une position fixe.

D'une manière générale, il ressort donc de ce qui précède que le procédé de l'invention se rapporte à la gestion d'un ensemble de tampons au moyen d'une liste classant les tampons par ordre d'utilisation la moins récente (LRU) et consiste, lorsqu'un tampon est référencé, à reclasser le tampon dans la liste en fonction de sa position courante p par rapport à une position de seuil t prédéterminée de la liste. La position de seuil peut être fixe ou variable. Si elle est variable, elle sera avantageusement définie en fonction du taux courant de succès d'accès aux tampons. Si l'information, une page dans l'exemple illustré, est déjà présente dans le tampon référencé, le procédé de l'invention consiste à maintenir la position courante du tampon si elle précède la position de seuil et à le rechainer à une position prédéterminée de la liste en cas contraire. On a vu que le rechainage peut se faire en tête de liste ou entre une première position de seuil tl et une autre position de seuil t2 précédant la première. Si le tampon référencé reçoit une information nouvelle, le procédé de l'invention consiste à le placer à la position de seuil. Dans le cas de plusieurs positions de seuil, le tampon sera placé dans la dernière position de seuil ou à une position de seuil autre que celle défini par rapport au taux courant de succès correspondant à une valeur fixe prédéterminée. Selon une variante, la position de seuil est une valeur fixe prédéterminée pour une gamme de valeurs du taux courant de succès.

Par ailleurs, bien que l'exemple se rapporte à une mémoire tampon en relation avec une base de données comme mémoire de données, on a vu que l'invention peut s'appliquer à toute mémoire tampon entre un processeur quelconque et une mémoire quelconque, dite mémoire de données pour éviter toute confusion. Dans le cas particulier d'un processeur central, la mémoire de données serait la mémoire centrale du système informatique. L'invention a donc généralement pour autre objet un système informatique pour la mise en oeuvre du procédé selon l'invention, comprenant un processeur connecté à une mémoire de données par l'intermédiaire d'un ensemble de tampons géré par un gestionnaire selon un algorithme de LRU, des moyens générateurs d'au moins une position de seuil, des moyens de comparaison connectés aux moyens générateurs et au LRU, et des moyens de calcul du taux courant de succès d'accès aux tampons ; les moyens de calcul étant connecté aux moyens générateurs de position de seuil pour définir au moins l'une des positions de seuil en fonction du taux de succès.

## Revendications

1. Procédé de gestion d'un ensemble (14) de tampons (15) au moyen d'une liste classant les tampons par ordre d'utilisation la moins récente (LRU), un tampon (15) référencé étant reclassé dans la liste en fonction de sa position courante (p) par rapport à une position de seuil (t) prédéterminée de la liste, caractérisé en ce qu'il consiste à définir la position de seuil en fonction du taux courant de succès d'accès aux tampons.

2. Procédé selon la revendication 1, caractérisé en ce que l'information étant déjà dans le tampon référencé, il consiste à maintenir la position courante du tampon si elle précède la position de seuil et à le rechaîner à une position prédéterminée de la liste en cas contraire.

3. Procédé selon la revendication 2, caractérisé en ce qu'il consiste à le rechaîner en tête de liste ou entre une première position de seuil (t1) et une deuxième position de seuil (t2) précédant la première.

4. Procédé selon l'une des revendications 1 à 3, caractérisé en ce que le tampon référencé recevant une information nouvelle, il consiste à le placer à la position de seuil.

5. Procédé selon la revendication 4, caractérisé en ce que, utilisant plusieurs positions de seuil, il consiste à placer le tampon à la dernière position de seuil.

6. Procédé selon l'une des revendications 1 à 5, caractérisé en ce que, utilisant plusieurs positions de seuil, une position de seuil autre que celle définie par rapport au taux courant de succès est une valeur fixe prédéterminée.

7. Procédé selon l'une des revendications 1 à 6, caractérisé en ce que la position de seuil est une valeur fixe prédéterminée pour une gamme de valeurs du taux courant de succès.

8. Système informatique (10) pour la mise en oeuvre du procédé selon l'une quelconque des revendications 1 à 7, caractérisé en ce qu'il comporte un processeur (11) connecté à une mémoire de données (12) par l'intermédiaire d'un ensemble (14) de tampons (15) géré par un gestionnaire (16) selon un algorithme de LRU, des moyens générateurs (20) d'au moins une position de seuil (t), des moyens de comparaison (21) connectés aux moyens générateurs et à l'algorithme, des moyens de calcul (19) du taux courant de succès d'accès aux tampons ; les moyens de calcul étant connectés aux moyens générateurs (20).

9. Système selon la revendication 8, caractérisé en ce que la mémoire de données est une base de données et l'ensemble (14) est tout ou partie de la mémoire centrale en liaison avec le processeur central (11) du système.

## Patentansprüche

1. Verfahren für das Management einer Gruppe (14) von Puffern (15) mittels einer Liste, die die Puffer in der Reihenfolge ihrer letzten Verwendung (LRU) sortiert, wobei ein bezeichneter Puffer (15) in der Liste in Abhängigkeit von seiner momentanen Position (p) in bezug auf eine vorgegebene Schwellenposition (t) der Liste umsortiert wird, dadurch gekennzeichnet, daß es darin besteht, die Schwellenposition in Abhängigkeit von der momentanen Quote des erfolgreichen Zugriffs auf die Puffer zu definieren.

2. Verfahren nach Anspruch 1, dadurch gekennzeichnet, daß es, wenn sich die Information bereits in dem bezeichneten Puffer befindet, darin besteht, die momentane Position des Puffers beizubehalten, wenn sie der Schwellenposition vorhergeht, und sie im entgegengesetzten Fall an eine vorgegebene Position der Liste umzuordnen.

3. Verfahren nach Anspruch 2, dadurch gekennzeichnet, daß es darin besteht, sie an den Anfang der Liste oder zwischen eine erste Schwellenposition (tl) und eine zweite Schwellenposition (t2), die der ersten vorhergeht, umzuordnen.

4. Verfahren nach einem der Ansprüche 1 bis 3, dadurch gekennzeichnet, daß es dann, wenn der bezeichnete Puffer eine neue Information empfängt, darin besteht, ihn an der Schwellenposition anzuordnen.

5. Verfahren nach Anspruch 4, dadurch gekennzeichnet, daß es dann, wenn mehrere Schwellenpositionen verwendet werden, darin besteht, den Puffer an der letzten Schwellenposition anzuordnen.

6. Verfahren nach einem der Ansprüche 1 bis 5, dadurch gekennzeichnet, daß dann, wenn mehrere Schwellenpositionen verwendet werden, eine Schwellenposition, die von jener verschieden ist, die durch die momentane Erfolgsquote definiert ist, ein vorgegebener fester Wert ist.

7. Verfahren nach einem der Ansprüche 1 bis 6, dadurch gekennzeichnet, daß die Schwellenposition für einen Bereich von Werten der momentanen Erfolgsquote ein vorgegebener fester Wert ist.

8. Datenverarbeitungssystem (10) zur Ausführung des Verfahrens nach irgendeinem der Ansprüche 1 bis 7, dadurch gekennzeichnet, daß es einen Prozessor (11), der über eine Gruppe (14) von Puffern (15), die durch eine Steuereinheit (16) gemäß einem LRU-Algorithmus gesteuert wird, mit einem Datenspeicher (12) verbunden ist, Mittel (20) zum Erzeugen wenigstens einer Schwellenposition (t), Vergleichsmittel (21), die mit den Erzeugungsmitteln und mit dem Algorithmus verbunden sind, und Rechenmittel (19) für die Quote des erfolgreichen Zugriffs auf die Puffer enthält; wobei die Rechenmittel mit den Erzeugungsmitteln (20) verbunden sind.

9. System nach Anspruch 8, dadurch gekennzeichnet, daß der Datenspeicher eine Datenbank ist und die Gruppe (14) den gesamten Hauptspeicher oder einen Teil des Hauptspeichers bildet, der mit dem Zentralprozessor (11) des Systems verbunden ist.

## Claims

1. Method of managing a set (14) of buffers (15) by means of a list classifying the buffers by order of least recent use (LRU), a referenced buffer (15) being reclassified in the list as a function of its current position (p) with respect to a predetermined threshold position (t) in the list, characterised in that it consists in defining the threshold position of the current rate of success in accessing the buffers.

2. Method according to Claim 1 characterised in that, the information already being in the referenced buffer, it consists in maintaining the current position of the buffer if it precedes the threshold position and in re-joining it to a predetermined position in the list in the other case.

3. Method according to Claim 2, characterised in that it consists in re-joining it at the head of the list or between a first threshold position (t1) and a second threshold position (t2) preceding the first one.

4. Method according to one of Claims 1 to 3, characterised in that the referenced buffer receiving new information, it consists in placing it in the threshold position.

5. Method according to Claim 4, characterised in that, using several threshold positions, it consists in placing the buffer in the last threshold position.

6. Method according to one of Claims 1 to 5, characterised in that, using several threshold positions, a threshold position other than that defined with respect to the current success rate is a predetermined fixed value.

7. Method according to one of Claims 1 to 6, characterised in that the threshold position is a predetermined fixed value for a range of values of the current success rate.

8. Information-processing system (10) for implementing the method according to any one of Claims 1 to 7, characterised in that it comprises a processor (11) connected to a data memory (12) via a set (14) of buffers (15) managed by a manager (16) according to an LRU algorithm, means (20) for generating at least one threshold position (t), comparison means (21) connected to the generator means and to the algorithm, means (19) for calculating the current rate of success in accessing the buffers; the calculation means being connected to the generator means (20).

9. System according to Claim 8, characterised in that the data memory is a database and the set (14) is all or part of the central memory in connection with the central processor (11) of the system.
